# EUROPEAN PATENT APPLICATION

(11) **EP 1 432 154 A2**
(43) Date of publication of application: **23.06.2004**
(21) Application number: 03104090.0
(22) Date of filing: 05.11.2003
(51) Int. Cl.: H04B 15/00, H04B 1/10, H04Q 7/38

(54) **Systems and methods for reducing interference**

(30) Priority: 20.12.2002 GB 0229833
(71) Applicant: MOTOROLA, INC., Schaumburg, IL 60196 (US)
(72) Inventor: Chater-Lea, David John, Basingstoke RG22 4PD (GB)
(74) Representative: McCormack, Derek James

(57) **Abstract**

A method of reducing interference (300, 400, 500, 600, 800, 900, 1000, 1100) in a multi-mode electronic system (200, 700) comprising a number of electronic devices (255, 260, 265, 270, 755, 760, 765, 770) operably coupled to a number of wireless devices (225, 230, 235, 240, 725, 730, 735, 740). The method includes the steps of identifying (320, 510, 610, 1010, 1100) interference between at least one electronic device and at least one wireless device and negotiating (325, 525, 620, 640, 835, 960, 1020, 1115, 1135) between the at least one electronic device and the at least one wireless device to identify a mechanism to reduce or remove the interference. An operating characteristic of one or more of the at least one electronic device or the at least one wireless device is adjusted (330, 340, 360, 410, 435, 635, 840, 850, 875, 910, 935) to reduce interference based on the mechanism. A multi-mode electronic system, a master abitrator and electronic and wireless devices are also described.

In this manner, when the multi-mode electronic system is applied to an automotive environment, the mechanism enables vehicular radio receivers to be able to reduce or remove the possibility of receiving interference from various electronic systems in a vehicle, or vice versa.

## Description

### Field of the Invention

This invention relates to systems and methods for reducing interference. The invention is applicable to, but not limited to, a mechanism for reducing electrical interference in an automotive vehicle when a wireless communication unit is installed.

### Background of the Invention

It is known in the field of this invention that automotive vehicles are manufactured with an ever-increasing amount of electronic equipment, for example engine management systems, vehicle control and management circuits and systems, navigation systems, etc. At the same time, the number of wireless devices, manufactured for installation and operation in vehicles, is also increasing. Such wireless devices include radio telephones, two way radios etc. This leads to an increase in potential for interference in both directions:
(i) From car electronics to radio receivers, due to harmonics of clock oscillators, etc., and
(ii) From radio transmitters to car electronics in the form of induced radio energy.

Interference from radio based electronics into radio receivers is a known problem, for example a radio micro controller board or synthesizer reference oscillator is known to create interference in the radio receiver.

Shifting a crystal frequency under control of the micro controller generally solves this problem. It is also known that this problem can also be solved by careful selection of alternative crystal frequencies, if the problem is known and appreciated ahead of installation. This can be implemented during a design/manufacture phase of the radio unit.

The aforementioned problems have been particularly noticeable when components and/or electronic circuits with digital or microprocessor logic having or requiring clock signals, are used in a vehicle radio. At certain frequencies, interference may be experienced by the radio receiver, thereby degrading the radio receiver's sensitivity. The interference may be as a result of direct harmonics of the clock frequencies emanating from the digital electronics. However, the interference has also been noticeable on harmonics of sub-multiples of the clock, or on mixed clock signals.

Following the recognition of such interference, radio designers introduced mechanisms to prevent self-interference from the radio components. These included selection of alternative frequency crystals for use with the digital/microprocessor clocks. These alternative frequency crystals were introduced during manufacture. Alternatively, processor controlled clock-pulling circuits were introduced. For example, a known technique is to put an inductor in series with a crystal, and use a transistor to short circuit the inductor under control of a microprocessor, thus varying the frequency produced.

To a lesser extent, similar problems have occurred with simple analogue talk and listen radios. For example, a common problem in radios of the 1960s and 1970s was harmonics of the second local oscillator interfering with the receiver. Fitting alternative crystals, as described above, solved these problems. However, as design techniques evolved, such dramatic solutions became unnecessary due to better screening and/or power supply decoupling, which could suppress the relatively low levels of these oscillators.

Nevertheless, nowadays where oscillators are used for digital clocking purposes, this problem is very apparent due to the large voltage swings, and harmonically rich switching edges of the clock waveforms.

It has been found that production tolerances cause a vehicle management system clock frequency to vary slightly from one unit to the next. Such clock variation has been found to cause an interference problem on some receiver frequencies of certain vehicular radios. In particular, some clock frequencies from the engine management systems produced harmonics which directly affect the receive frequencies of Police radios installed in Police cars. Thus, with knowledge of the frequency (or frequencies) used by the Police, the engine management systems may be identified as suitable or unsuitable according to the crystal frequencies that they incorporate. The identification allows the police cars to be built with a compatible engine management system, for specific public safety schemes, to avoid interference. This is a manual selection process and does not involve physical control of the engine management system clock frequency. It is also a one-time process that remains for the lifetime of the vehicle.

Of course, the effects of interference from vehicle ignition, fuel supply and other systems to radio receivers is also a well known problem. This is usually mitigated by screening the interfering components, together with suppression components (usually a mixture of inductive, capacitive and resistive components), which modify the waveform produced by the interfering device.

The reverse problem, that of radio emissions from transmitters causing interference to operation of vehicle electronics, is also well known. There are reported cases of engine management systems ceasing to function, resulting in inoperation of the engine, in the presence of nearby transmitters. One solution to this is the screening of engine management systems. Screening can be achieved with careful positioning of physical metal shields. Screening may also be implemented using metal braiding around wiring looms. Suppression techniques are also a known solution, where inductive or capacitive components are introduced to reduce the level of radio frequencies that are presented to management system components.

All of these known methods require manual interaction, manual programming or installation. The inventor of the present invention has both recognised and appreciated that such techniques have become impractical. This is particularly the case when attempting to find a solution to these problems for the plethora of vehicles being manufactured, together with the substantial increase in electronic and radio devices.

Thus, a need has arisen to provide a mechanism for reducing or removing interference between one or more electronic devices, preferably in an automotive vehicle, and one or more wireless communication devices, wherein the aforementioned disadvantages may at least be alleviated.

### Summary of the invention

In accordance with a first aspect of the present invention, there is provided a method of reducing interference in a multi-mode electronic system, as claimed in Claim 1.

In accordance with a second aspect of the present invention, there is provided a multi-mode electronic system, as claimed in Claim 25.

In accordance with a third aspect of the present invention, there is provided an electronic device, as claimed in Claim 25.

In accordance with a fourth aspect of the present invention, there is provided a wireless communication device, as claimed in Claim 27.

In accordance with a fifth aspect of the present invention, there is provided a master arbitrator device, as claimed in Claim 29.

In accordance with a sixth aspect of the present invention, there is provided a storage medium, as claimed in Claim 30.

In accordance with a seventh aspect of the present invention, there is provided a multi-mode electronic system, as claimed in Claim 31.

Further aspects of the present invention are defined in the dependent Claims.

In summary, the inventive concepts herein described provide a master arbitrator system and methods, together with an open negotiation system and methods invention that reduce or remove a level of interference automatically by negotiation of operating characteristics between devices.

Exemplary embodiments of the present invention will now be described, with reference to the accompanying drawings, in which:

### Brief Description of the Drawings

FIG. 1 is a block schematic diagram of a wireless communication unit which may be adapted in accordance with the preferred embodiment of the present invention;
FIG. 2 is a block schematic diagram of a master arbitrator system;
FIG. 3 is a flowchart of a preferred initialisation process of a master arbitrator system;
FIG. 4 is a flowchart of a preferred process of changing a received or emitted frequency in response to interference in a master arbitrator system, in accordance with the various inventive concepts of a first embodiment of the present invention;
FIG. 5 is a flowchart of a preferred process of interference detection in a receiving device within a master arbitrator system, in accordance with the various inventive concepts of a first embodiment of the present invention;
FIG. 6 is a flowchart of a preferred process of a device malfunctioning due to a suspected interference in a master arbitrator system, in accordance with the various inventive concepts of a first embodiment of the present invention;
FIG. 7 is a block schematic diagram of an open negotiation system, in accordance with an embodiment of the invention;
FIG. 8 is a flowchart of a preferred initialisation process of an open negotiation system embodying the present invention;
FIG. 9 is a flowchart of a preferred process of changing a received or emitted frequency in response to interference in an open negotiation system;
FIG. 10 is a flowchart of a process of interference detection in a receiving device within an open negotiation system; and
FIG. 11 is a flowchart of a process relating to a device malfunctioning due to a suspected interference in an open negotiation system.

### Detailed description of embodiments of the invention

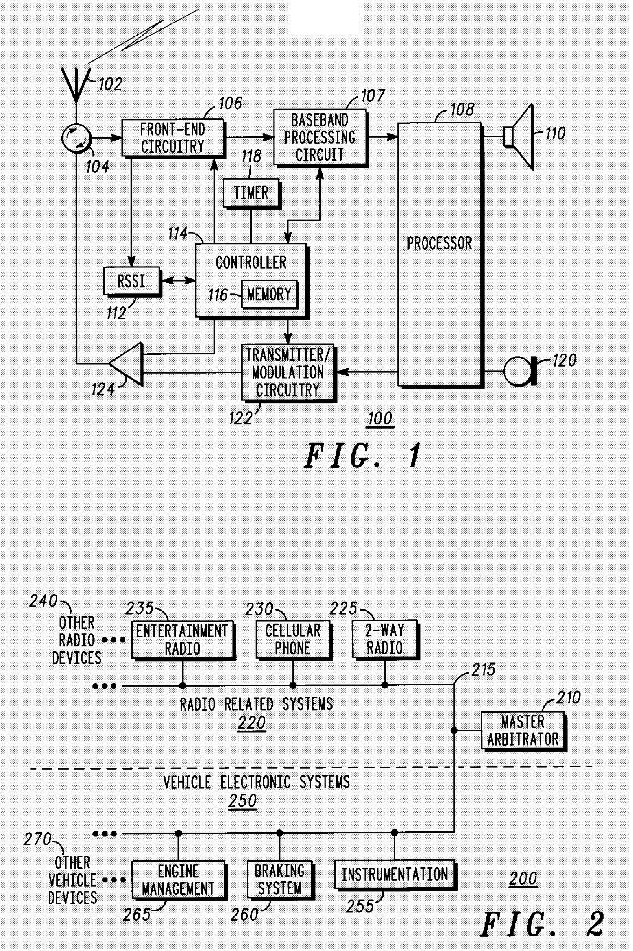

In accordance with first and second embodiments of the present invention, wireless communication devices and electronic devices are adapted to detect and/or respond to interference. Most wireless communication devices have substantially the same configuration. Thus, adaptation of a wireless communication device is described with respect to FIG. 1.

Similar adaptation of an electronic device, for example one suitable for use in a vehicle, will be required. However, the configurations of potential electronic devices vary widely. Hence, in this regard, it is envisaged that one or more of the electronic devices will include a microprocessor and an interference detector operably coupled to, or integral within, the electronic device. In accordance with a second embodiment of the present invention, the electronic device preferably also includes a negotiation mechanism, for example a software algorithm contained in the microprocessor. The adaptation will therefore follow a similar vein to that of the wireless communication device, as will be appreciated by a person skilled in the art.

Referring now to FIG. 1, a block diagram of a wireless communication device 100, adapted to support the inventive concepts of an embodiment of the present invention is shown.

The wireless communication device 100 includes an antenna 102 preferably coupled to a duplex filter or circulator or antenna switch 104 that provides isolation between receive and transmit chains within wireless communication device 100.

The receive chain includes receiver front-end circuitry 106 (effectively providing reception, filtering and intermediate or base-band frequency conversion), which may provide a scanning function (the ability to sample information on more than one channel). The front-end circuitry 106 is serially coupled to a signal processor 108 (generally realised by a digital signal processor (DSP)) via a baseband (back-end) processing circuit 107.

A controller 114 is operably coupled to the front-end circuitry 106 to control operations thereof so that the receiver can calculate receive bit-error-rate (BER) or frame-error-rate (FER) or similar link-quality measurement data from recovered information, which may also incorporate a received signal strength indication (RSSI) 112 function. In accordance with the first and/or second embodiments of the present invention, the RSSI function 112 is in the process of identifying interference and report such interference to the signal processing function 108. Alternatively, the error rate calculation may be used alone, or in conjunction with the RSSI function. The RSSI function 112 is operably coupled to the scanning front-end circuit 106. The memory device 116 stores various device-specific data and programs, for example decoding/encoding functions, frequency and timing information for the communication device 100, etc.

A timer 118 is operably coupled to the controller 114 to control the timing of operations, namely the transmission or reception of time-dependent signals, within the wireless communication device 100. As known in the art, received signals that are processed by the signal processing function are typically input to an output device, such as a speaker or visual display unit (VDU).

The transmit chain essentially includes an input device 120, such as a microphone, coupled in series through a processor 108, transmitter/modulation circuitry 122 and a power amplifier 124. The processor 108, transmitter/modulation circuitry 122 and the power amplifier 124 are operationally responsive to the controller, with an output from the power amplifier coupled to the duplex filter or circulator or antenna switch 204, as known in the art.

In accordance with a preferred embodiment of the present invention, the signal processor 108, in conjunction with the memory device 116 and controller 114 have been adapted to tune the frequency of operation of the wireless communication unit 100. In particular, the processor 108, in conjunction with front-end receiver 106 and/or RSSI function 112 monitor transmissions from other wireless communication devices or electronic devices within the vehicle. In this regard, the circuitry is configured to identify interference from one of these devices, and in response to initiate a negotiation process. This monitoring can take the form of either an active or passive function, whereby to fulfil an active function, the receiver actively searches for a source of interference. Whereas to fulfil a passive function, the receiver only receives wanted transmissions, but detects interference to these.

For some enhanced embodiments, for example, with the logging function described later, the memory device 116 has also been adapted to store data related to the identified levels and characteristics of the interferers and any identified solutions to remove or reduce the interference.

In the wireless communication device 100, the signal processor 108 in the transmit chain may be implemented as distinct from the processor in the receive chain. Alternatively, a single processor 108 may be used to implement the processing of both transmit and receive signals, as shown in FIG. 1.

Of course, the various components within the wireless communication device 100 may be realised in discrete or integrated component form. Furthermore, it is within the contemplation of the invention that the wireless communication device 100 may be any wireless communication device, such as a portable or mobile radio, a mobile phone, a personal digital assistant, a wireless connected laptop computer, etc.

More generally, any re-programming or adaptation of the processor 108, according to the preferred embodiment of the present invention, may be implemented in any suitable manner. For example, a new processor 108 or memory device 116 may be added to a conventional wireless communication device 100, or alternatively existing parts of a conventional wireless communication unit may be adapted, for example by reprogramming one or more processors therein. As such the required adaptation may be implemented in the form of processor-implementable instructions stored on a storage medium, such as a floppy disk, hard disk, PROM, RAM or any combination of these or other storage multimedia.

The present invention provides two preferred ways to implement a negotiation mechanism described below. However, it is envisaged that these two ways are only preferred embodiments, and that other negotiation mechanisms and system configurations could be applied. A first embodiment utilises a master arbitrator approach, as described in the system diagram of FIG. 2 and the flowcharts of FIG.s 3 to 6.

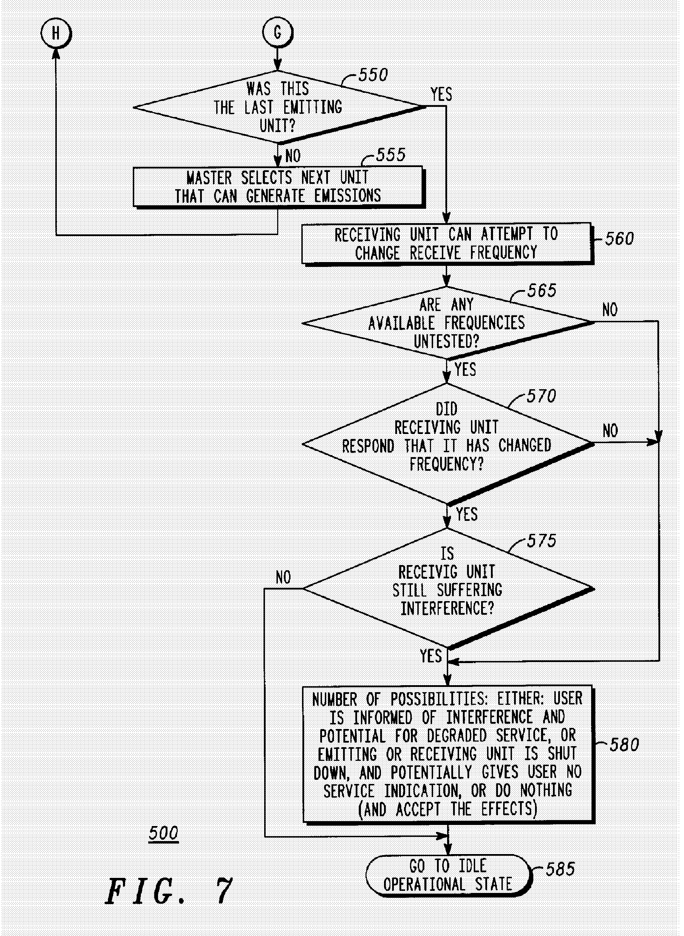

A second embodiment utilises an open negotiation approach as described in the system of FIG. 7 and the flowcharts of FIG.s 8 to 11. However, it is envisaged that other system layouts may utilise the inventive concepts herein described. Furthermore, as the system applies to interference between electronic devices and radio emitting devices, for example, the wireless communication device 100 of FIG. 1 when installed in an automotive vehicle, the system may be considered as applicable to a 'multi-mode' electronic system.

A function of the present invention is that the vehicular electronic devices and/or radio devices are able to detect the presence of interference. In the case of radio related system devices, it is envisaged that one or more of the following detects interference:
(i) detection of basic radio frequency (RF) signals using signal processing function 108 and RSSI function 112, for example signals with no control or data signalling, over long periods of time. In this regard, no worthwhile BER measurement can be calculated; and/or
(ii) detection of a RSSI level that is deemed inappropriate for the level of errors being received in transmission. For example, a high bit error rate (BER) when the radio frequency signal strength is high indicates interference, as the BER should be low for high RSSI.

In the case of vehicle related system devices, it is envisaged that a vehicular electronic device detects interference in one or more of the following ways:
(i) a sudden incidence of an erroneous condition;
(ii) by means of a detector, which detects an increase in RF or rectified RF voltages from device input ports; and/or
(iii) use of a simple detector to detect RF levels on an input port of the vehicular device.

In the context of the present invention, the form of a vehicle electronic device may take a number of forms, for example engine management systems, vehicle control and management circuits and systems, navigation systems, etc. In respect of operating in the hereinafter-described embodiments, it is assumed that the vehicle electronic device includes an ability for the device to detect a presence of interference, communicate to other devices in the system and a mechanism for negotiating the removal or reduction of interference.

The preferred system embodiments described with respect to FIG. 2 and FIG. 7 utilise a bus in order to benefit from the recent developments of both hardware and protocols in supporting specific standard bus designs. These have been designed to be resilient in the hostile environment of a vehicle, i.e. poor earthing, a confined space, power cables supporting substantial current levels, the current being prone to significant transients and ripple next to low power signal lines, etc. Although the first and second embodiments illustrate the respective devices communicating via a bus 215, 715 it is within the contemplation of the invention that other communication mechanisms can be used. For example, the radio and electronic devices may utilise universal serial bus (USB) or general port input-output (GPIO) interfaces in order to communicate between each other.

Furthermore, the preferred embodiments require a mechanism for the respective radio related system devices and vehicle related system devices to identify interference and negotiate a change in operational characteristics. Thus, for example, a mechanism for both to negotiate a change of frequency, power level or other appropriate parameter(s) to reduce or avoid interference, is described.

In this regard, the negotiation between radio-based devices and vehicular-based electronic devices is a significant enhancement over known integration mechanisms Previously, the integration, at least in vehicles, has so far been limited to interaction between cellular phone systems and audio systems. For example, the integration has been limited to combining the audio and GSM phone installations using common speakers such that muting of the entertainment device is effected when a phone call is made.

It is also envisaged that the negotiation mechanism may utilise calculated or predicted knowledge of potential interference. Such calculations/predictions are performed by the microprocessor using measurements provided by the detector (say RSSI function 112) or measurements previously stored in a memory device (116) coupled to the microprocessor. For example, the master arbitrator system of FIG's 2 to 6 or the open negotiation system of FIG's 7 to 10, may adapt a desired radio reception frequency if it is known to be a direct harmonic of a known clock frequency of an automotive control system.

### Master Arbitrator System

Referring next to FIG. 2, an example of a master arbitrator system 200 is illustrated, in accordance with a preferred embodiment of the present invention. The master arbitrator system includes a master arbitrator 210 that negotiates between devices in a radio related system 220 and devices in a vehicle related system 250. The master arbitrator 210 negotiates between the respective devices via a bus 215. The radio related system 220 might include, for example, a 2-way mobile radio unit 225, a cellular phone 230, an entertainment-based radio 235 and/or any other wireless device(s) 240. The vehicle related system 250 might include, for example, an engine management system 265, a braking system 260, vehicular instrumentation 255 and/or any other vehicle electronic system(s) 270.

The preferred operation of the Master arbitrator system 200 is described in the flowcharts of FIG.s 3 to 6. In operation, the Master arbitrator 210 controls the operation of frequency generating components and/or devices. In an alternative first embodiment, the Master arbitrator 210 is in communication with all of the radio frequency devices and vehicular electronic devices in the automotive system via individual connections.

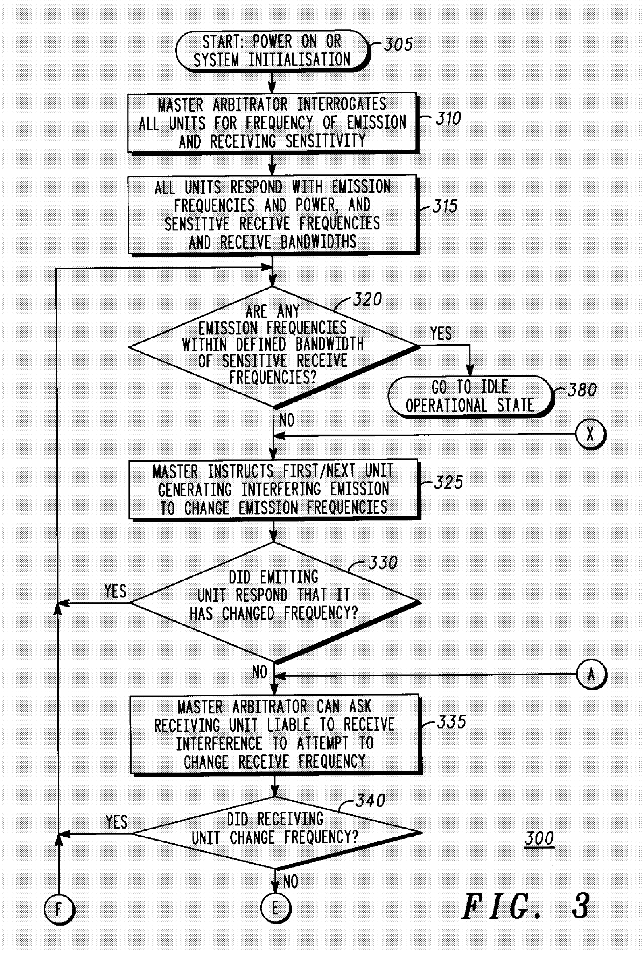

Referring now to FIG. 3, a preferred process 300 starts following system power up or initialisation, as shown in step 305. The system arbitrator then interrogates a number, preferably all, of the devices connected to the master arbitrator via the bus. The interrogation includes determining, for example, all known operating frequencies, signal levels, receiver sensitivity levels, etc., as shown in step 310. Alternatively, where frequency agile radio components are used, the interrogation may be initiated by the frequency agile component, whenever it changes its frequency of operation.

In response to the interrogation message from the master arbitrator, the electronic and/or radio devices respond with the requested information, for example, all known operating frequencies, signal levels, receiver sensitivity levels, etc., as shown in step 315.

Alternatively, it is envisaged that such a report may be an unsolicited message, or as a result of a periodic polling from the master arbitrator.

The master arbitrator then determines whether any of the emitted frequencies are within the defined bandwidth of sensitive receive frequencies, as in step 320. This enables the master arbitrator to decide whether to initiate/perform a negotiation process. If the master arbitrator determines that none of the emitted frequencies are within the defined bandwidth of sensitive receive frequencies in step 320, then the master arbitrator goes into an idle operational state, as shown in step 380.

If the master arbitrator determines that one or more of the emitted frequencies are within the defined bandwidth of sensitive receive frequencies in step 320, then the master arbitrator instructs a first (or a next) (vehicle or radio) electronic device that is generating interfering emission to change its emitted frequency, as shown in step 325. In the situation where more than one interfering emission can be generated by the device, each emission is preferably changed, in turn, and the effects of each change analysed. Preferably, the electronic device that has been instructed to change its frequency informs the master arbitrator once it has changed its frequency, as shown in step 330. If the master arbitrator receives this message from, say, the electronic device, the master arbitrator then determines whether one or more of the emitted frequencies are within the defined bandwidth of sensitive receive frequencies again, in step 320. The process then repeats, as shown.

If the electronic device that has been instructed to change its frequency does not inform the master arbitrator of a change in frequency in step 330, the master arbitrator may ask the receiving device that is affected by the interfering emissions to change its receiving frequency, as shown in step 335. If the receiving device that is affected by the interfering emissions changes its receiving frequency in step 335, the master arbitrator then determines whether one or more of the emitted frequencies are within the defined bandwidth of sensitive receive frequencies again, in step 320. The process then repeats, as shown.

If the receiving device that is affected by the interfering emissions does not change its receiving frequency in step 335, the master arbitrator may ask the sensitive receiving device as to whether it is suffering from interference, in step 345. If the sensitive receiving device is no longer suffering from interference in step 350, the master arbitrator preferably repeats the process from step 310 with regard to each other receiving device, in step 370.

If the sensitive receiving device is suffering from interference in step 350, the master arbitrator may then ask the emitting device if it can reduce its transmit power, thereby reducing the level of interference, in step 355. A determination is then made as to whether the emitting device has reduced its transmit power in step 360. If the emitting device has reduced its transmit power in step 360, the master arbitrator preferably asks the sensitive receiving device if it is still suffering from interference, in step 345. The process then repeats, from step 345, as shown.

If the emitting device has not reduced its transmit power in step 360, a number of options are envisaged for the master arbitrator, in step 365. One option is to inform the vehicle user of the interference suffered by the receiving device, and perhaps the potential for a degraded level of service of the affected device. Alternatively, or in addition, either the emitting or receiving device may be powered down, thereby providing the user no service from the respective device. Alternatively, the master arbitrator may decide to do nothing, and accept the consequences. A yet further alternative course of action would be to initiate a major warning in the vehicle that prompts the user to shut down selectable device(s), etc.

The master arbitrator then preferably repeats the process to ensure that no other receiving units are affected by interfering emissions, in step 370. In this regard, the process repeats at step 320 until the last receiving device is checked, in step 375. At which time, the master arbitrator moves into an idle operational state in step 380. In this manner, a master arbitrator is able to determine levels of interference and negotiate between respective interferer(s) and receiving device(s) to reduce or remove the interference.

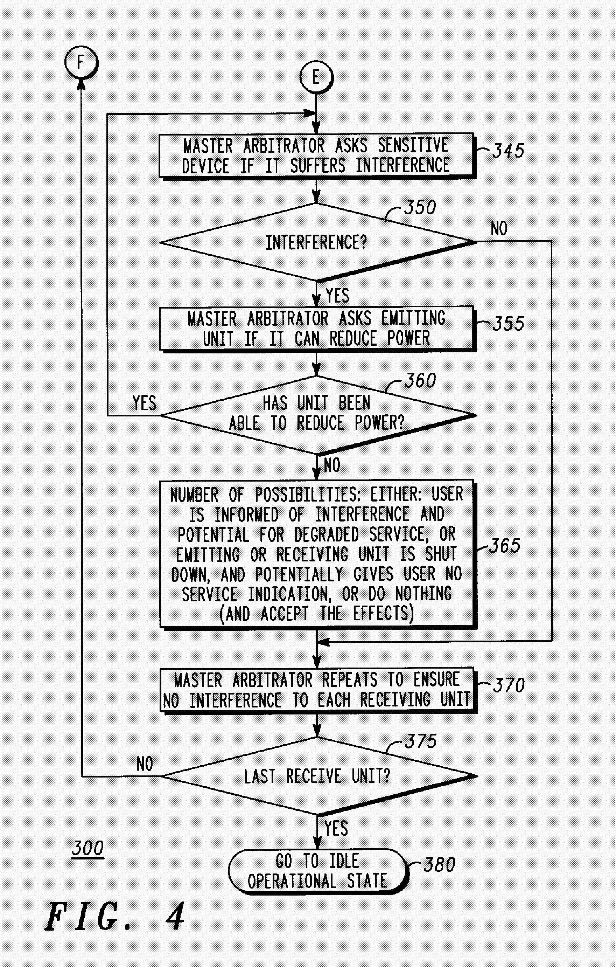

Referring now to FIG. 4, a flowchart 400 illustrates the master arbitrator operation in response to a change of received or emitted frequency. Starting from an idle operational state in step 405, an interference affected receiving device changes its frequency in step 410. Preferably, the receiving device reports its new operating frequency and receiver bandwidth to the master arbitrator, as shown in step 415.

A determination is then made as to whether the receiving device's new operating frequency is likely to be affected by any interfering emissions, in step 420. If the receiving device's new operating frequency is determined as not being likely to be affected by any interfering emissions in step 420, the receiving device is assumed to be in an acceptable operational state. Thus, the master arbitrator moves into an idle operational state in step 425. If the receiving device's new operating frequency is determined as being likely to be affected by an interfering emission in step 420, the master arbitrator preferably instructs the interfering unit to change its interfering emission frequency in step 325 of FIG. 3. The process then continues from step 325 of FIG. 3, as described above.

Alternatively, starting from an idle operational state in step 430, an interference-generating (emitting) device changes its frequency in step 435. Preferably, the emitting device reports its new operating frequency to the master arbitrator, as shown in step 440. A determination is then made as to whether the emitting device's new operating frequency is likely to affect any other receiving device's operating frequencies, in step 445. If the emitting device's new operating frequency is determined as not being likely to affect any other receiving device's operating frequencies in step 445, the master arbitrator is able to return to an idle operational state in step 450.

If the emitting device's new operating frequency is determined as being likely to affect another receiving device's operating frequency in step 445, a determination is made as to whether the emitting device can select a new frequency, in step 455. If the emitting device is able to select a new operating frequency, in step 455, the emitting device changes its frequency in step 435. The process then repeats from step 435. If the emitting device is not able to select a new operating frequency in step 455, the master arbitrator may ask the interference affected receiving device(s) to change its/their receiving frequency in step 335 in FIG. 3. The process then continues from step 335 of FIG. 3, as described above.

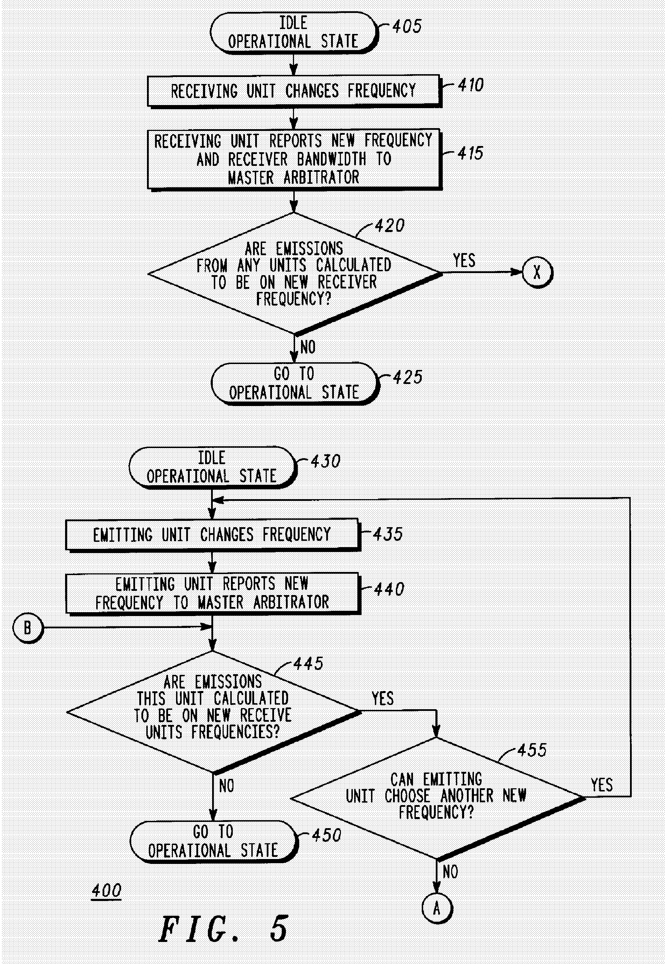

Referring now to FIG. 5, a flowchart 500 illustrates the master arbitrator operation in response to a receiving device detecting interference. Starting from an idle operational state again in step 505, a receiving device detects interference in step 510. Preferably the receiving device reports the interference to the master arbitrator, together with its receive frequency and the receiver bandwidth, as shown in step 515. A device that needs to employ a potentially sensitive frequency may inform the master arbitrator of this fact to assist the interference negotiation process. It is envisaged that such a report may be an unsolicited message, or as a result of a periodic polling from the master arbitrator. Alternatively, or in addition, this could occur, for example, each time a radio receiver frequency is changed.

The master arbitrator then checks to determine whether any emitting devices sent a report indicating an operating frequency that may cause the interfering emission, in step 520. If such a report from an emitting device has been received, the process moves to, and continues from, step 325 in FIG. 3, where the master arbitrator instructs the device generating the interfering emission to change its emission frequency. If the master arbitrator did not receive such a report in step 520, the master arbitrator preferably selects a device that is able to generate, or likely generates, the interfering emissions in step 525.

The master arbitrator may select the interference-generating device based on one or more calculations as to whether any known attached device is likely to be generating a frequency that will cause this interference. For example, if frequencies of clock signals used by attached devices are known, the calculation may include calculation of harmonics and intermodulation products. If the master arbitrator does not know frequencies generated by attached devices, it is envisaged that the master arbitrator may poll attached devices for frequencies.

The master arbitrator then instructs the selected emitting device to change its operating frequency in step 530. If such frequencies were calculated, the master arbitrator may send a message to the generating device to, say, shift its clock frequency. This instruction could be in the form of an automatic selection, or presentation to the user that (s)he might make some alternative selection. Alternatively, the master arbitrator can send clock shift commands to connected devices sequentially. In the situation where more than one interfering emission can be generated by the emitting device, each emission is preferably changed, in turn, and the effects of each changed emission analysed.

A determination is then made as to whether the emitting device responded to the master arbitrator instruction and changed its operating frequency in step 535. If the emitting device changed its operating frequency, the master arbitrator preferably asks the receiving device whether the level of interference has reduced or ceased, as shown in step 540. Alternatively, after each command the master arbitrator may interrogate the receiving device to see if the problem has been alleviated. If the level of interference has ceased in step 545, a determination is made as to whether the changed operating frequency affects any other receiving device, in step 445 of FIG. 4. The protocol that is used preferably allows the receiving device to report increased interference if the shift causes even more problems. The process then continues from step 445, as described above.

If the interference has not ceased in step 545, or the emitting device has not informed the master arbitrator that it has changed its operating frequency in step 535, a determination is made as to whether the selected emitting device is the last emitting device that could generate the interference, as shown in step 550. If the selected emitting device was not the last emitting device that could generate the interference in step 550, the master arbitrator preferably selects an alternative potential interference-generating device in step 555. The process then repeats from step 530, with the master arbitrator instructing the alternative potential interference-generating device to change its operating frequency in step 530.

If the selected emitting device was the last emitting device that could generate the interference in step 550, the receiving device preferably changes its receive frequency in step 560. A determination is then made as to whether any of the receiving device frequencies are untried, in step 565. If one or more potential frequencies are untried in step 565, a determination is made as to whether the receiving device has changed its receive frequency to the determined untried frequency in step 570. If the receiving device has changed its frequency in step 570, a determination is made as to whether the receiving device is still suffering from the interference in step 575. If the receiving device is no longer suffering from interference with the changed operating frequency in step 575, the master arbitrator moves into an idle operational state in step 585.

If the receiving device is still suffering from interference with the changed operating frequency in step 575, or the receiving device has not changed its frequency in step 570, or all potential frequencies have been tried in step 565, a number of opportunities for the master arbitrator are envisaged, as shown in step 580. For example, one option is to inform the vehicle user of the interference suffered by the receiving device, and the potential for a degraded level of service by the affected device.

Alternatively, or in addition, either the emitting or receiving device may be powered down, thereby providing the user no service from the respective device.

Alternatively, the master arbitrator may decide to do nothing, and accept the consequences.

A yet further alternative course of action would be to initiate a major warning in the vehicle that prompts the user to shut down selectable device(s), etc. The master arbitrator then moves into an idle operational state in step 585. In this manner, the master arbitrator negotiates between respective devices and continues to determine the effects of dynamic adjustment of the device's operational characteristics on other devices.

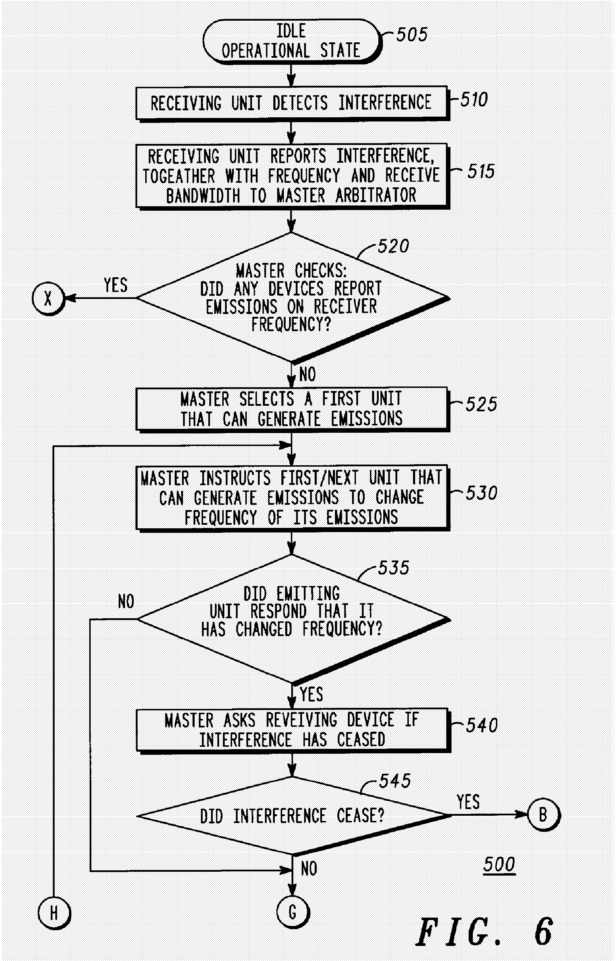

Referring now to FIG. 6, a flowchart 600 illustrates the master arbitrator operation in response to detected interference by some device not intended to receive radio transmissions, for example an automotive electronics device (hereafter referred to as a non-receiving device). It is envisaged that the process described hereafter with respect to FIG. 6 will be followed when a non-receiving device, for example an engine management system, malfunctions due to a suspected interference.

Starting from an idle operational state in step 605, a receiving device detects interference in step 610. Preferably, in response to the receiving device detecting interference the receiving device sends a message to the master arbitrator. The message preferably includes details of the interfering frequency, as shown in step 615. The master arbitrator then selects a first emitting device to ask to reduce its transmit power, in step 620. In a preferred embodiment, the master arbitrator may select the emitting device with the highest RF transmit output power as the one to reduce its transmit power. Such a device is the one that potentially creates the most interference.

A determination is then made, in step 625, as to whether the effect of the interference has reduced sufficiently or ceased. If the level of interference has decreased sufficiently, or it has ceased, the master arbitrator returns to an idle operational state in step 630. If the level of interference has not decreased sufficiently, or it has not ceased, a determination is made as to whether the transmit power can be further reduced in step 635. If the transmit power of the emitting device can be reduced further, the master arbitrator requests that the emitting device does so, in step 640. The process then repeats from step 625 to see whether the reduced transmit power has the necessary effect on reducing the level of interference.

If the transmit power of the emitting device cannot be reduced further in step 635, the master arbitrator may ask a selected emitting device to restore its RF output power, in step 645. In this manner, if a reduction in the transmit output power had insufficient, or negligible, effect the optimum operating conditions should be restored to the emitting device.

Preferably, a determination is then made as to whether the selected emitting device is the last one that is deemed to be transmitting at too high an RF signal level, i.e. one that exceeds a predetermined threshold, as shown in step 650. If the selected emitting device is the last one that is deemed to be transmitting at too high an RF signal level in step 650, the master arbitrator informs the receiving device that the interference problem cannot be resolved, as shown in step 660. In this manner, the affected receiving device is able to inform the user that the affected receiving device's performance may be degraded or that the device should be taken out of service.

A yet further alternative course of action would be to initiate a major warning in the vehicle that prompts the user to shut down radio systems, etc. The master arbitrator may then return to an idle operational state in step 630.

If the selected emitting device is not the last one that is deemed to be transmitting at too high an RF signal level in step 650, the master arbitrator asks the next emitting device that is transmitting at too high an RF signal level to reduce its transmit power, as shown in step 655. The process then repeats from step 625, in determining whether the level of interference has reduced sufficiently, or ceased, in response to the latest reduction in emissions.

In any case of detected interference, whether resolved or not, the master arbitrator may log the event for later retrieval by, say, a management device. The management device may be connected by radio so that a simple additional interrogation process may also be applied to obtain data from a number of devices. This will permit particular installation problems to be identified that result in, for example, major sources of interference. It is envisaged that alternative system design, configuration, device selection, device programming, etc., may resolve such problems.

It is envisaged that a further enhancement to a logging system would be to include positional information if a vehicle-location on board device is able to identify the vehicle's location, for example, via a global positioning system (GPS) or other positioning receiver. This would beneficially allow an external management system to identify problematic geographical locations, especially if the interference was not resolvable by on-board negotiation. In this manner, a master arbitrator is then able to pre-empt, or resolve, interference problems more quickly, when the problem is location-based.

A yet further enhancement to the protocol would be to include some indication of the severity of interference. It is envisaged that the master arbitrator could also use an algorithm to ensure the best compromise result if more than one device is suffering interference. For example, one radio receiver might suffer interference with one clock setting in a management system; another might suffer interference with an alternative setting. The master arbitrator can then determine by some principle including weighting of user needs, interference level effects, etc., which setting causes least problems.

### Open Negotiation System

Referring next to FIG. 7, an example of an open negotiation system 700 is illustrated, in accordance with the second embodiment of the present invention. The open negotiation system includes a number of devices in a radio related system 720, each operably coupled to electronic devices in a vehicle related system 750. The open negotiation system 700 does not include a master arbitrator to negotiate between devices from the respective systems.

It is envisaged that all electronic/wireless devices are interconnected. The open negotiation system 700 relies on the respective devices to negotiate between them to evolve to acceptable operational characteristics in the system. The negotiation is preferably performed via a bus 715.

Alternatively, a simple serial connection may be used between two or three devices if only a few devices are fitted, or a daisy chain system if many devices are fitted. As a further alternative, all of the radio frequency related devices 720 and all of the electronic devices in the vehicle electronic system 750 may be coupled to each other by individual connections.

The radio related system 720 might include, for example, a 2-way mobile radio unit 725, a cellular phone installation 730, an entertainment-based radio 735 and/or any other wireless device(s) 740. The vehicle related system 750 might include, for example, an engine management system 765, a braking system 760, vehicular instrumentation 755 and/or any other vehicle electronic device(s) 770.

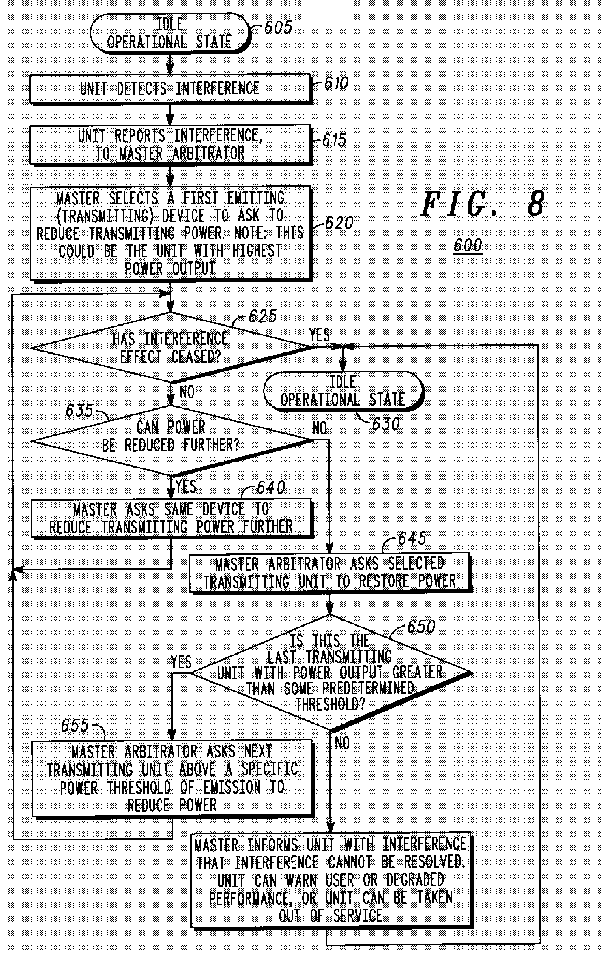

The preferred operation of the open negotiation system is described in the flowcharts of FIG.s 8 to 11. Referring now to FIG. 8, the preferred initialisation process 800 for the open negotiation system starts on system power up or initialisation, as shown in step 805. Each device then polls/interrogates a number, preferably all, of the other devices on the bus. The polling/interrogation process preferably includes establishing whether the polled/interrogated device is a radio receiver or radio emitter (or both), as shown in step 810.

Furthermore, the interrogation preferably includes determining, for example, all known operating frequencies, signal levels, receiver sensitivity levels, etc., in step 810. Alternatively, where frequency agile radio components are used, the interrogation may be initiated by the frequency agile component whenever it changes its frequency of operation. In the preferred embodiment of the open negotiation system, a preferred order of subsequent communication to the other devices is established, based on the results of the polling/interrogation process.

The receiving devices, in turn, interrogate each emitting device to obtain an indication of the emitted frequency or frequencies, as shown in step 815. Alternatively, it is envisaged that a number of emitting devices may broadcast to the receiving devices, in an appropriate manner, details of its emitted frequency or frequencies. Sensitive frequencies can also be broadcast.

Receiving devices are preferably able to calculate whether any of the broadcast emissions or emission information is likely to cause interference within their particular receiver bandwidth, as shown in step 820. For each receiving device in turn, as shown in step 825, the following determinations are made. First, a determination is made as to whether there is any emissions within the defined receiver bandwidth of the sensitive receive frequencies, in step 830. If there are no interfering emissions, the processor moves onto the next receiving device in step 885. If there are one or more emissions of concern in step 830, the receiving device preferably instructs a first (or next) interference-generating device to change its emitting frequency in step 835.

If the interference generating device is determined as having changed its emitting frequency, in step 840, it is envisaged that the emitting device may broadcast its new frequency to all devices in the systems, as shown in step 845. In this manner, the receiving devices are able to evaluate the effect of this new transmit frequency on their operations. The process of checking received frequencies is then repeated by each receiving device in turn, in step 825.

If the interference generating device is determined as not having changed its emitting frequency, in step 840, it is envisaged that the receiving device may attempt to change its receive frequency, as shown in step 850. If the receiving unit changes its receive frequency, in step 850, the process reverts back to step 830. The process then repeats, as described above.

If the receiving device did not change its receive frequency in step 855, it is envisaged that the receiving device may measure the actual level of the interference, in step 860. If it is then determined that there is a low level of interference in step 865, that receiving device may accept the level of interfence and continue operating, in which case the process moves onto the next receiving device in step 885.

If instead it is determined in step 865, that interference exists at an unacceptable level, then the receiving device may ask the emitting device to reduce its transmit power in step 870. If the emitting device is determined as having been able to reduce its transmit power, in step 875, the process repeats from step 865. If the emitting device is determined as not having been able to reduce its transmit power, in step 875, a number of possibilities exist, as detailed in step 880. For example, a user of the device may be informed of the interference and the potential for a degraded level of service.

Alternatively, the receiving device or the emitting device may be switched off, potentially leaving the user with no service. A further alternative is that the system does nothing and accepts the consequence. A yet further alternative course of action would be to initiate a major warning in the vehicle that prompts the user to shut down radio systems, etc.

The process then repeats for the next receiving device, in step 885. If the next receiving device is not the last receiving device in step 890, the process repeats for the next receiving device from step 825. If the next receiving device is the last receiving device in step 890, the system devices preferably move into an idle operational state, as shown in step 895. In this manner, an interference-affected receiving device is able to determine levels of interference and negotiate between respective interferer(s) and receiving device(s) to reduce or remove the interference.

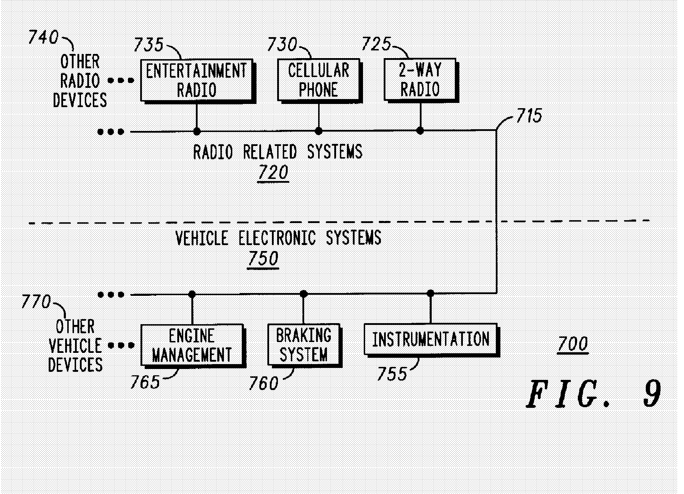

Referring now to FIG. 9, a flowchart 900 illustrates the open negotiation system operation in response to a change of received or emitting frequency. Starting from an idle operational state in step 905, an interference affected receiving device changes its receiving frequency in step 910. Preferably, the receiving device checks for any reported emissions within the receiver bandwidth of the new operating frequency, as shown in step 915.

A determination is then made as to whether the receiving device's new operating frequency is likely to be affected by any interfering emissions, in step 920. If the receiving device's new operating frequency is determined as not being likely to be affected by any interfering emissions in step 920, the receiving device is assumed to be in an acceptable operational state. Thus, the receiving device moves into an idle operational state in step 925. If the receiving device's new operating frequency is determined as being likely to be affected by an interfering emission in step 920, the receiving device preferably instructs the interfering unit to change its interfering emission frequency in step 825 of FIG. 8. The process then continues from step 825 of FIG. 8, as described above.

Alternatively, starting from an idle operational state in step 930, an interference-generating (emitting) device changes its frequency in step 935. Preferably, the emitting device broadcasts its new operating frequency to all receiving devices, as shown in step 940. All receiving devices then preferably check whether the interference generating device's new operating frequency falls within their receiver bandwidth, as shown in step 945. A determination is then made as to whether the emitting device's new operating frequency is located on the receive frequency of any receiving device, in step 950. If the emitting device's new operating frequency is determined as not being located on the receive frequency of any receiving device in step 950, the emitting device is able to return to an idle operational state, in step 955.

If the emitting device's new operating frequency is determined as being located on the receive frequency of any receiving device in step 950, the receiving device that is affected preferably requests that the emitting device selects an alternative operating frequency, as shown in step 960. A determination is then made as to whether the emitting device can select a new frequency, in step 965. If the emitting device is able to select a new operating frequency, in step 965, the emitting device changes its frequency and preferably broadcasts the new frequency to all receiving devices, as shown in step 970. The process then repeats from step 945.

Alternatively, if the emitting device is not able to select a new operating frequency in step 965, the receiving device(s) may decide to change its/their receiving frequency, in step 850 in FIG. 8. The process then continues from step 850 in FIG. 8.

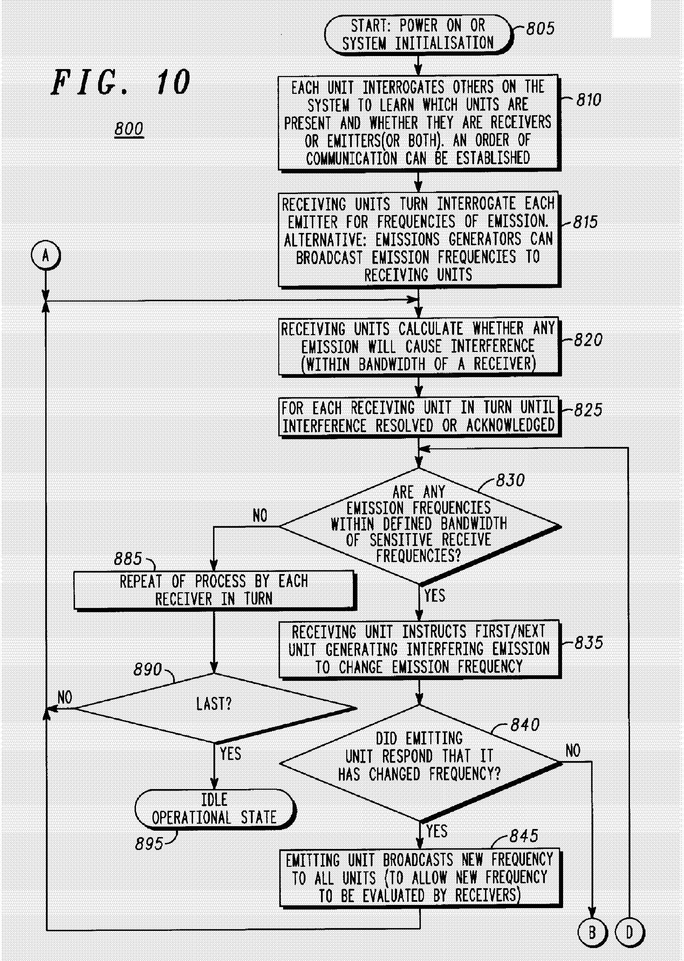

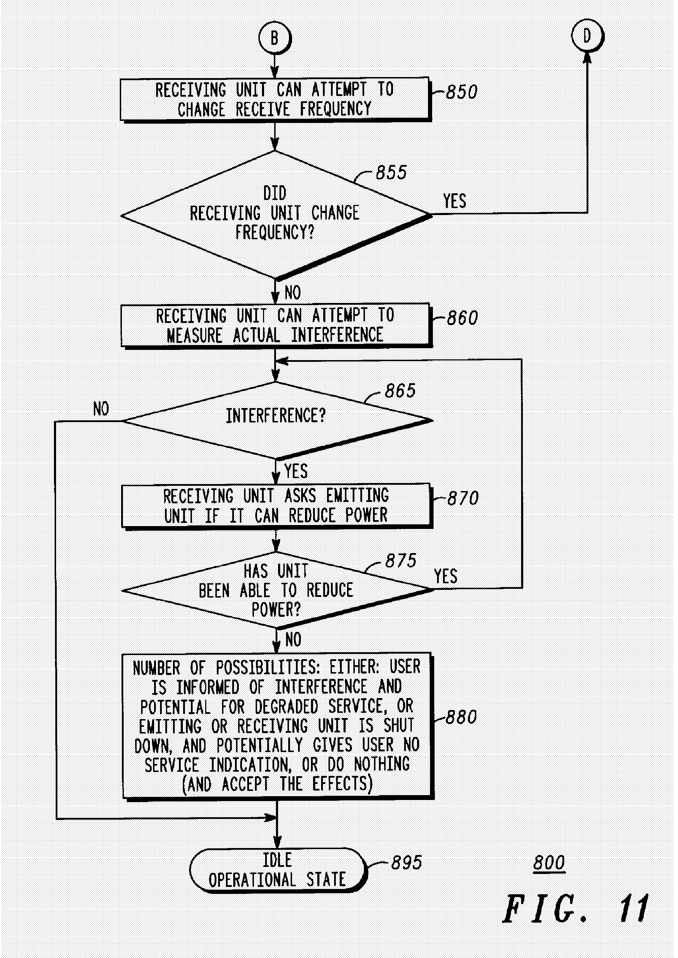

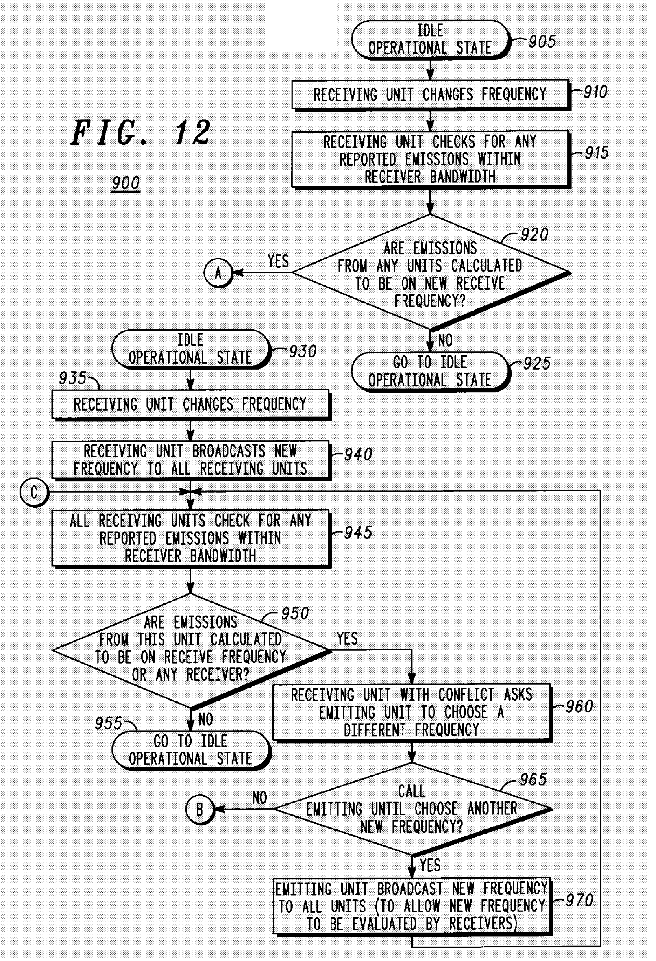

Referring now to FIG. 10, a flowchart 1000 illustrates the open negotiation operation in response to a receiving device detecting interference. Starting from an idle operational state again in step 1005, a receiving device detects interference in step 1010. Preferably, the receiving device selects a first emitting device that is able to generate the detected interference, as shown in step 1015.

The receiving device may select the interference-generating device based on one or more calculations as to whether any known attached device is likely to be generating a frequency that will cause this interference. For example, if frequencies of clock signals used by attached devices are known, the calculation may include calculation of harmonics and intermodulation products. If the receiving device does not know frequencies generated by attached devices, it is envisaged that the receiving device may poll attached devices to determine emitted frequencies.

If such frequencies were calculated, the receiving device may send a message to the interference-generating device to shift, say, its clock frequency. This instruction could be in the form of an automatic selection, or presentation to the user that (s)he might make an alternative selection. Alternatively, the receiving device may send clock shift commands to connected devices sequentially. In the situation where more than one interfering emission can be generated by the emitting device, each emission is preferably changed, in turn, and the effects of each changed emission analysed.

It is also envisaged that a receiving device that needs to employ a potentially sensitive frequency may inform all generating devices of this fact. In this manner, the emitting device(s) can hopefully avoid transmitting on the sensitive frequency and cause interference.

The receiving device then asks the first (or next) generating (emitting) device to change its operating frequency, in step 1020. A determination is then made as to whether the generating (emitting) device has changed its operating frequency in step 1025. If it is determined that the generating (emitting) device has changed its operating frequency in step 1025, a determination is made as to whether the interference has ceased, in step 1030. If the interference has ceased in step 1030, due to the changing operating frequency of the generating (emitting) device, the generating (emitting) device preferably broadcasts its new operating frequency to all receiving devices, as shown in step 1035.

In this manner, the receiving devices are able to evaluate whether the new operating frequency may interfere with their receiver operations. The process then moves to step 945 in FIG. 9, where all receiving devices check whether any reported emissions are operating within their receiver bandwidth. The process then follows on from step 945 in FIG. 9, as described above.

If the interference has not ceased in step 1030, the receiving device preferably instructs the generating (emitting) device to restore its previous operating frequency, as shown in step 1040.

A determination is then made as to whether the generating (emitting) device concerned with the above steps is the last generating (emitting) device, as in step 1045. Similarly, if it is determined that the generating (emitting) device has changed its operating frequency in step 1025, a determination is made as to whether the generating (emitting) device concerned with the above steps is the last generating (emitting) device, as in step 1045. If the generating (emitting) device is not the last generating (emitting) device in step 1045, the receiving device selects the next generating (emitting) device that is able to generate emissions, in step 1050, and the process repeats from step 1020. If the generating (emitting) device is the last generating (emitting) device in step 1045, the receiving device may attempt to change its receive frequency in step 1055. In this manner, if a change in frequency had insufficient, or negligible, effect the optimum operating conditions should be restored to the emitting device.

If none of the changes in frequency or power of the emitting devices causes the interference to be reduced to acceptable levels, a determination is then made by the receiving device as to whether any of the receiving device frequencies are untried, in step 1060. If one or more potential frequencies are untried in step 1060, a determination is made as to whether the receiving device has changed its receive frequency to the determined untried frequency in step 1065. If the receiving device has changed its frequency in step 1065, a determination is made as to whether the receiving device is still suffering from the interference in step 1070. If the receiving device is no longer suffering from interference with the changed operating frequency in step 1070, the receiving device moves into an idle operational state in step 1080.

If the receiving device is still suffering from interference with the changed operating frequency in step 1070, or the receiving device has not changed its frequency in step 1065, or all potential frequencies have been tried in step 1060, a number of opportunities for the receiving device are envisaged, as shown in step 1075. For example, one option is to inform the user of the receiving device that is suffering interference, the potential for a degraded service.

Alternatively, or in addition, either the emitting or receiving device may be powered down, thereby providing the user no service from the respective device. A further alternative is that the receiving device may decide to do nothing, and accept the consequences.

A yet further alternative course of action would be to initiate a major warning in the vehicle that prompts the user to shut down electronic/wireless communication device(s), etc. The receiver device then moves into an idle operational state in step 1080. In this manner, units are able to determine levels of interference and negotiate between one or more respective interferer(s) to reduce or remove the interference.

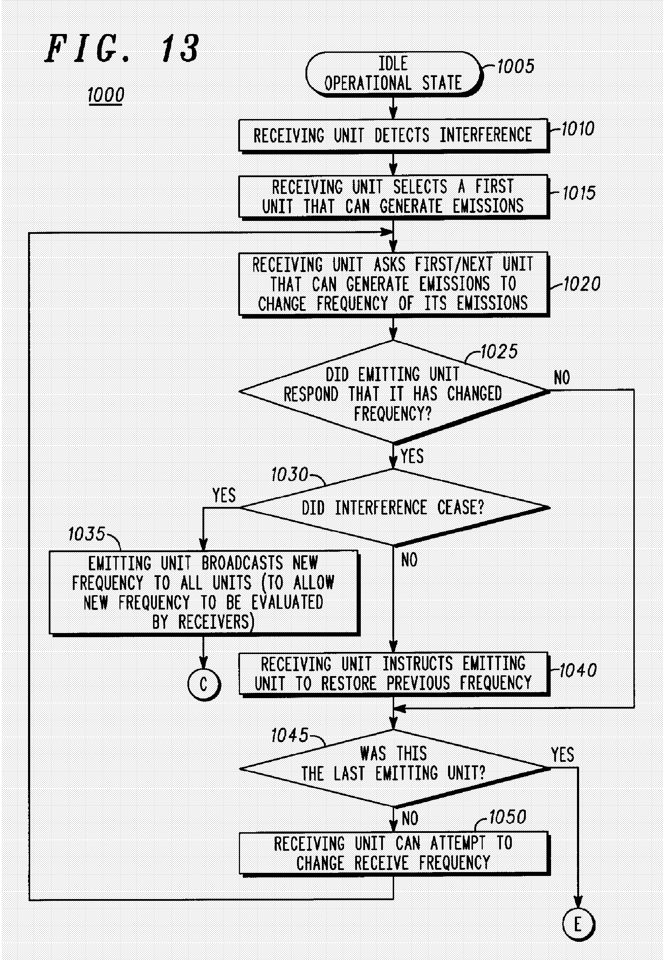

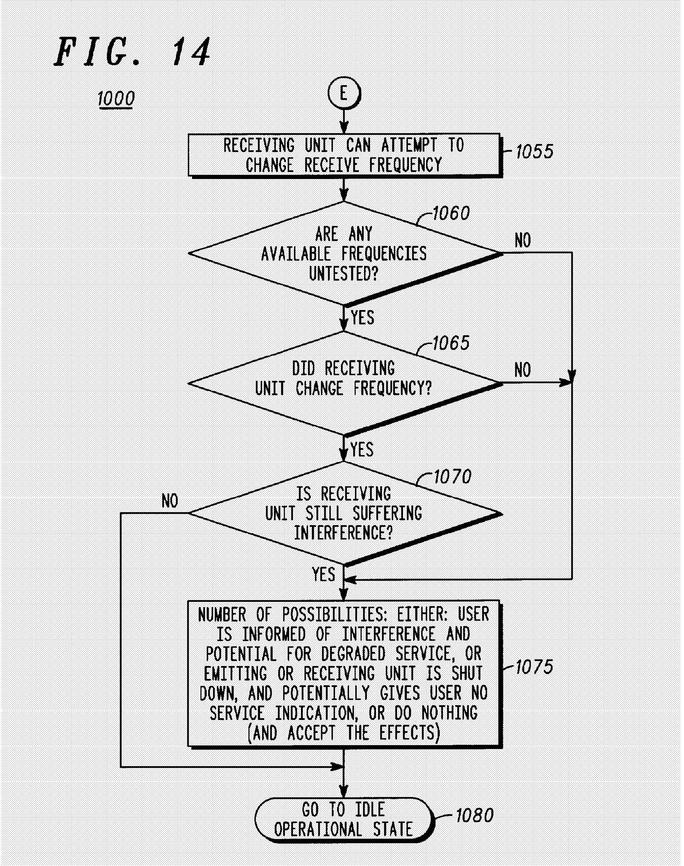

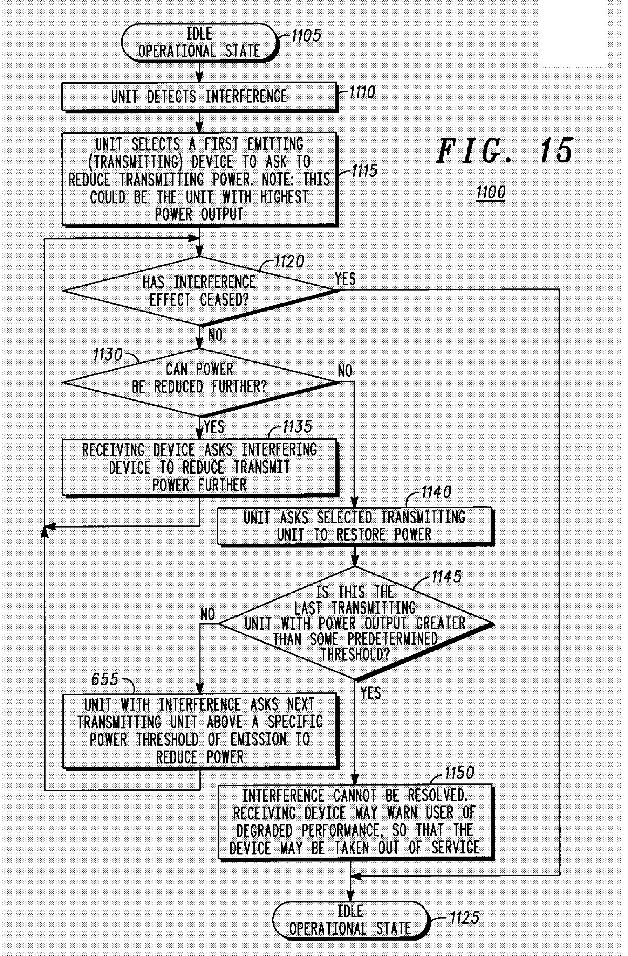

Referring now to FIG. 11, a flowchart 1100 illustrates the open negotiation system operation in response to interference to some device not intended to receive radio transmissions, for example an automotive electronics device (hereafter referred to as a non-receiving device). It is envisaged that the process described hereafter with respect to FIG. 11 will be followed when a non-receiving device, for example an engine management system, malfunctions due to a suspected interference.

Starting from an idle operational state in step 1105, a non-receiving device detects interference in step 1110. When the non-receiving device detects interference, it is envisaged that it may either interrogate a suspected interfering device directly to request a change of an operational characteristic, such as shifting a clock oscillator, or changing a power level; or it can broadcast to all devices that it is detecting interference on a particular frequency. Any device that might be generating this frequency can then change its operating frequency and report back. Alternatively the non-receiving device may decide to poll attached devices individually, requesting a change, to see if the interference can be reduced, as described below.

Preferably, in response to the non-receiving device detecting interference the non-receiving device selects a first emitting device to ask to reduce its transmitting power, in step 1115. In a preferred embodiment, the non-receiving device may select the emitting device with the highest RF transmit output power as the one to reduce its transmitting power. Such a device may be deemed the one that potentially creates the most interference.

A determination is then made, in step 1120, as to whether the effect of the interference has sufficiently reduced or the interference has ceased. If the level of interference has decreased sufficiently, or it has ceased, the non-receiving device returns to an idle operational state in step 1125. If the level of interference has not decreased sufficiently, or it has not ceased, a determination is made as to whether the transmit power can be further reduced in step 1130.

If the transmit power of the emitting device can be reduced further in step 1130, the non-receiving device requests that the emitting device does so, in step 1135. The process then repeats from step 1120 to see whether the reduced transmit power has the necessary effect on reducing or removing the level of interference.

If the transmit power of the emitting device cannot be reduced further in step 1130, the non-receiving device may ask a selected emitting device to restore its RF output power, in step 1140. In this manner, if a reduction in the transmit output power had insufficient, or negligible, effect the optimum operating conditions should be restored to the emitting device.

Preferably, a determination is then made as to whether the selected emitting device is the last one that is deemed to be transmitting at too high an RF signal level, i.e. one that exceeds a predetermined transmit threshold, as shown in step 1145. If the selected emitting device is the last one that is deemed to be transmitting at too high an RF signal level in step 1145, the non-receiving device preferably informs the user that the interference problem cannot be resolved in this manner, as shown in step 1150. The user is made aware that the affected non-receiving device's performance may be degraded and that the device may warrant being taken out of service.

An alternative course of action would be to initiate a major warning in the vehicle that prompts the user to shut down electronic/wireless device(s), etc. The non-receiving device may then return to an idle operational state in step 1125.

If the selected emitting device is not the last one that is deemed to be transmitting at too high an RF signal level in step 1145, the non-receiving device preferably asks the next emitting device that is transmitting at too high an RF signal level to reduce its transmit power, as shown in step 1155. The process then repeats from step 1120, in determining whether the level of interference has reduced sufficiently, or ceased, in response to the latest reduction in emissions.

For the first or second embodiments, in the case of detected interference, whether resolved or not, the particular non-receiving device may log the event for later retrieval and processing by a management device. The management device may be connected directly, by a radio link or via a bus, so that a simple interrogation process may also be used to obtain data easily from a number of electronic devices. This will permit particular problems to be identified, for example major sources of interference, the level of which may be reduced, as before.

It is envisaged that a further enhancement to such a logging mechanism would be to include positional information if a vehicle-location on board device is able to identify the vehicle's location, for example, via a global positioning system (GPS) or other positioning receiver. This would beneficially allow an external management system to identify problem locations, especially if the interference was not resolvable by on-board negotiation.

A yet further enhancement to the protocol would be to include an indication of the severity of interference. It is envisaged that the receiving device(s) could also use an algorithm to ensure the best compromise result if they are made aware that more than one device is suffering interference. For example, one radio receiver might suffer interference with one clock setting in a management system; another might suffer interference with an alternative setting. The receiving device may then determine, by a suitable principle such as weighting interference calculations, which setting causes least problems. Negotiation could then allow devices suffering interference to weight the impact of interference, such that if alternative settings of the interferer cause different problems to the affected devices, they are able to negotiate which setting has the lesser overall impact.

Whereas the inventive concepts described hereinbefore are focused on automotive installations, it is envisaged that the same principle may also be applied to other mobile installations, for example aeronautical installations, or fixed locations. Furthermore, it is envisaged that use of a wireless protocol, such as Bluetooth™, may be used for local communications in order to negotiate to reduce interference.

A skilled artisan would appreciate that a number of the aforementioned steps in any of the flowcharts could be taken in a different order. A few examples of reordering of steps include:
(i) the first initialisation step could be omitted, and the system could simply be interference driven.
(ii) a receiving device may initiate, or be requested to make, a change to its receive frequency before the transmitting device is requested to reduce power or change frequency.
(iii) The transmitting device change of power and frequency could be varied in different order; and
(iv) The transmitting devices in interference-detected cases could be asked to change frequency as well as power.
The means to identify interference as relating to emissions is not stated here, but there are various means known to those skilled in the art, as described above.
It will be understood that the interference reduction mechanism described above provides at least the following advantages:
(i) The mechanism enables radio receivers, say in a vehicle, to be able to reduce or remove the possibility of receiving interference from various electronic systems in a vehicle.
(ii) The mechanism also enables vehicular-based electronic systems to reduce or remove interference from radio transmitters in vehicles interfering with vehicular functions.
(iii) The mechanisms described above do not require manual interaction, manual programming or installation.

Whilst specific, and preferred, implementations of the present invention are described above, it is clear that one skilled in the art could readily apply variations and modifications of such inventive concepts.

Thus, a method of reducing interference in a multi-mode electronic system, a wireless communication device, a multi-mode electronic system, an electronic device and a master arbitrator are provided by the invention, whereby the disadvantages described with reference to prior art arrangements are substantially alleviated.

## Claims

1. A method of reducing interference (300, 400, 500, 600, 800, 900, 1000, 1100) in a multi-mode electronic system (200, 700) comprising a plurality of electronic devices (255, 260, 265, 270, 755, 760, 765, 770) operably coupled to a plurality of of wireless devices (225, 230, 235, 240, 725, 730, 735, 740), the method being **characterised by** the steps of:
identifying (320, 510, 610, 1010, 1100) interference between at least one electronic device and at least one wireless device;
negotiating (325, 525, 620, 640, 835, 960, 1020, 1115, 1135) between said at least one electronic device and said at least one wireless device to identify a mechanism to reduce or remove said interference; and
adjusting (330, 340, 360, 410, 435, 635, 840, 850, 875, 910, 935) an operating characteristic of one or more of said at least one electronic device and said at least one wireless device to reduce or remove said interference based on said mechanism.

2. The method of reducing interference in a multi-mode electronic system according to Claim 1, wherein said multi-mode electronic system is a mobile system, for example an automotive-based system or an aeronautical-based system.

3. The method of reducing interference in a multi-mode electronic system according to Claim 1 or Claim 2, wherein said step of identifying interference is performed by said at least one electronic device detecting radio interference from said at least one wireless device.

4. The method of reducing interference in a multi-mode electronic system according to Claim 1 or Claim 2, wherein said step of identifying interference is performed by said at least one wireless device detecting interference, for example harmonic interference, from said at least one electronic device.

5. The method of reducing interference in a multi-mode electronic system according to any one preceding Claim, wherein said step of adjusting includes adjusting one or more of the following operational characteristics: radiated power, operating frequency, cease radio transmission, switching a device off.

6. The method of reducing interference in a multi-mode electronic system according to any one preceding Claim, wherein said step of negotiating is performed by a negotiating device, for example, a master arbitraotr device or an interference-affected receiving device, operably coupled to a plurality of devices in the multi-mode electronic system.

7. The method of reducing interference in a multi-mode electronic system according to Claim 6, wherein the negotiating device is operable to perform the step of:
interrogating or polling a plurality of devices operably coupled to said negotiating device to retrieve details of one or more of the device's operating characteristics.

8. The method of reducing interference in a multi-mode electronic system according to Claim 6, wherein the negotiating device performs the step of:
broadcasting to a plurality of devices operably coupled to said negotiating device to inform said plurality of devices of at least one operating characteristic of one or more of the devices.

9. The method of reducing interference in a multi-mode electronic system according to Claim 7 or Claim 8, the method further including the step of:
receiving, by said negotiating device, at least one operating characteristic transmit by at least one of said plurality of devices in response to said step of interrogating or polling or broadcasting.

10. The method of reducing interference in a multi-mode electronic system according to Claim 9, wherein the negotiating device determines whether an emitted frequency indicated in the received at least one operating characteristic resides within a receiver bandwidth of a receiver device, thereby causing interference.

11. The method of reducing interference in a multi-mode electronic system according to Claim 10, wherein the the method includes requesting or instructing, by said negotiating device, a device identified as transmitting said interfering emitted frequency for the emitting device to alter an operational characteristic of said device in order to reduce or remove said interference.

12. The method of reducing interference in a multi-mode electronic system according to Claim 11, wherein the negotiating device detects whether said interfering device has adjusted said operational characteristic and, if said interfering device has not adjusted said operational characteristic, said device affected by said interference changes or is requested to change one or more of its operational characteristics.

13. The method of reducing interference in a multi-mode electronic system according to any one preceding Claim, wherein the method further includes:
broadcasting or reporting, by said negotiating device or said emitting device or said interference affected device if it is not said negotiating device, any changed operational characteristic to one or more devices in the system.

14. The method of reducing interference in a multi-mode electronic system according to Claim 13, which includes determining, by said negotiating device, whether said changed operational characteristic causes or suffers from further interference.

15. The method of reducing interference in a multi-mode electronic system according to any one preceding Claim, wherein said at least one operating characteristic includes: an interfering frequency of emission, a transmitted power level, a receiver sensitivity level, a receiver bandwidth.

16. The method of reducing interference in a multi-mode electronic system according to any preceding Claim, wherein the method is further **characterised by** a step of:
repeating said steps of identifying, negotiating and adjusting to reduce or remove interference for all devices within the multi-mode electronic system.

17. The method of reducing interference in a multi-mode electronic system according to any one preceding Claim, wherein the step of identifying interference between at least one electronic device and at least one wireless device includes the step of detecting interference in an interference driven manner, or initialising said multi-mode electronic system in response to a start up operation.

18. The method of reducing interference in a multi-mode electronic system according to any one preceding Claim, wherein the step of identifying interference between at least one electronic device and at least one wireless device includes identifying a severity of interference, for example using a weighting scheme, such that a determination can be made as to which of a number of devices is affected most by said interference.

19. The method of reducing interference in a multi-mode electronic system according to any one preceding Claim, the method including logging details of identified, broadcast or informed interference such that said logged interference details are available for later retrieval and actioning.

20. The method of reducing interference in a multi-mode electronic system according to Claim 19, wherein said step of actioning includes a step of identifying one or more interference problems to be corrected rather than negotiated out of said multi-mode electronic system.

21. The method of reducing interference in a multi-mode electronic system according to any one preceding Claim, the method including locating said multi-mode electronic system, for example using a global positioning system, such that said step of negotiating a reduction or removal of interference is based on location.

22. The method of reducing interference in a multi-mode electronic system according to any one preceding Claim, wherein said step of negotiating is performed using a Bluetooth communication medium.

23. The method of reducing interference in a multi-mode electronic system according to any one of preceding Claims 6 to 22, wherein said negotiating device is a master arbitrator operably coupled to a number of electronic devices and a number of wireless devices, wherein said multi-mode electronic system is performing a master arbitrator negotiation mechanism via a bus.

24. The method of reducing interference in a multi-mode electronic system according to any one of preceding Claims 6 to 22, wherein said negotiating device comprises an interference affected receiving device operably coupled to a number of electronic devices and/or a number of wireless devices, wherein said multi-mode electronic system is performing an open negotiation mechanism, via a bus.

25. A multi-mode electronic system (200, 700) adapted to employ the method of any one of Claims 1 to 24.

26. An electronic device (255, 260, 265, 270, 755, 760, 765, 770) adapted for use in the method according to any one of any of Claims 1 to 24.

27. A wireless communication device (225, 230, 235, 240, 725, 730, 735, 740) for use in a mobile environment, adapted for use in the method according to any one of Claims 1 to 24.

28. The wireless communication device according to Claim 27 wherein the device is one of a portable or mobile PMR radio, a mobile phone, a personal digital assistant, a wireless capable laptop computer.

29. A master arbitrator device (210) for use in the method according to any one of Claims 1 to 24.

30. A multi-mode electronic system (200, 700) comprising a plurality of electronic devices (225, 230, 235, 240, 725, 730, 735, 740) operably coupled to a plurality of wireless devices (255, 260, 265, 270, 755, 760, 765, 770), wherein at least one of said number of electronic devices or said number of wireless devices comprises:
an interference identification mechanism (112) for detecting interference in a receiving device; and
a communication medium (215, 715), operably coupling said receiving device to a number of electronic devices and/or wireless devices; said multi-mode electronic system **characterised by**:
a negotiation device (210, 725, 730, 735, 740, 755, 760, 765, 770), operably coupled to said number of electronic devices and/or said number of wireless devices, and configured to identify interference in said receiving device and negotiate a reduction in interference between said device and an identified interferer.

31. The multi-mode electronic system according to Claim 30, wherein said negotiation device is:
a master arbitrator (210); or
a receiving device (725, 730, 735, 740, 755, 760, 765, 770) from said number of electronic devices and/or a number of wireless devices affected by said identified interference.

32. The multi-mode electronic system according to Claim 30 or Claim 31, wherein said multi-mode electronic system is an automotive electronic system, including vehicle control and/or management electronics and/or one or more radio telephony devices and/or one or more radio data devices.
